# EUROPEAN PATENT APPLICATION

(11) **EP 2 786 660 A1**
(43) Date of publication of application: **08.10.2014**
(21) Application number: 14161274.7
(22) Date of filing: 24.03.2014
(51) Int. Cl.: A21D 6/00, A23L 1/29, A23L 3/005, A23L 3/10, A23B 4/01

(54) **Heat-moisture treated flours for improved retort efficiency**

(30) Priority: 25.03.2013 US 201313849976
(71) Applicant: Corn Products Development, Inc, 04311-000SP Sao Paulo (BR)
(72) Inventor: Drew, Leslie, North Brunswick, NJ New Jersey 08902 (US); Dar, Yadunandan L., Somerset, NJ New Jersey 08873 (US)
(74) Representative: Held, Stephan

(57) **Abstract**

The application relates to a process comprising retorting a food product comprising heat-moisture treated flour for a time from about 15 minutes to about 80 minutes to achieve a F₀ value of at least 10.

## Description

Canned and jarred food products are often heated for cooking and sterilization in a retort. Exposure time at sufficiently high temperatures is required to ensure food safety. This is usually characterized by a F₀ value. The larger the required F₀ value for food safety, the longer the time the food needs to be exposed to the required retort processing temperature. This is a limiting factor in capacity utilization for companies that manufacture retorted food products. Further, heating at high temperatures, particularly for a long time, is often deleterious to the food product, changing its organoleptic properties, such as taste, aroma, color, or texture.

One of the ingredients used in many retorted products is flour. Flour provides viscosity and has a unique mouth feel that has become associated with, for example, creamy soups, home style gravies, and sauces. Others have tried to increase the efficiency of retorting to reduce the time-temperature profile necessary to ensure food safety, for example by replacing flour with starch. These changes are not fully acceptable for a number of reasons such as changes in appearance, taste, or texture and the complexity resulting from substituting starch for flour.

### SUMMARY

In one aspect, the application provides a process comprising retorting a food product comprising heat-moisture treated flour for a time from about 15 minutes to about 80 minutes to achieve a F₀ value of at least 10.

### DETAILED DESCRIPTION

In one aspect, the application provides a process comprising retorting a food product comprising heat-moisture treated flour for a time from about 15 minutes to about 80 minutes to achieve a F₀ value of at least 10.

In one embodiment, the time is from about 50 minutes to about 70 minutes.

In one embodiment, the heat-moisture treated flour comprises from about 0.1 wt% to about 20 wt% of the total weight of the retorted food product.

In another embodiment, the heat-moisture treated flour comprises from about 5% (wt/wt) to about 7% (wt/wt) of the total weight of the retorted food product. In one embodiment, the time to achieve a F₀ value of at least 10 is at least 10% less than the time to achieve a F₀ value of at least 10 with a flour which was not heat-moisture treated.

In another embodiment, the time to achieve a F₀ value of at least 10 is at least 20% less than the time to achieve a F₀ value of at least 10 with a flour which was not heat-moisture treated.

In another embodiment, the time to achieve a F₀ value of at least 10 is at least 30% less than the time to achieve a F₀ value of at least 10 with a flour which was not heat-moisture treated.

In one embodiment, the heat-moisture treated flour comprises from about 10 wt% to about 100 wt % of the starch and/or flour in the food product.

In another embodiment, the heat-moisture treated flour is the only starch or flour in the food product.

In one embodiment, the heat-moisture treated flour has replaced an equivalent amount of the same flour which was not heat-moisture treated on a 1:1 wt/wt basis in the retorted food product.

In one embodiment, the retorted food product is soup, sauce, gravy, or beverage. In one aspect, the application provides a process comprising:
a) substituting heat-moisture treated flour for a larger amount of flour which was not heat-moisture treated on a less than 1:1 wt/wt basis in a food product; and
b) retorting the food product comprising heat-moisture treated flour for a time from about 15 minutes to about 80 minutes to achieve a F₀ value of at least 10.

In one embodiment, the amount of the heat-moisture treated flour is in an amount of at least 5% (wt/wt) less than the flour which was not heat-moisture treated.

In another embodiment, the amount of the heat-moisture treated flour is in an amount of at least 10% (wt/wt) less than the flour which was not heat-moisture treated.

In another embodiment, the amount of the heat-moisture treated flour is in an amount of at least 15% (wt/wt) less than the flour which was not heat-moisture treated.

In one embodiment, the heat-moisture treated flour comprises from about 10 wt% to about 100 wt % of the starch and/or flour in the food product.

In another embodiment, wherein the heat-moisture treated flour is the only starch or flour in the food product.

In one embodiment, the heat-moisture treated flour comprises from about 0.1 wt% to about 20 wt% of the total weight of the retorted food product.

In one embodiment, the retorted product of a process comprising retorting a food product comprising heat-moisture treated flour for a time from about 15 minutes to about 80 minutes to achieve a F₀ value of at least 10.

In one embodiment, the retorted product of a process comprising:
a) substituting heat-moisture treated flour for a larger amount of flour which was not heat-moisture treated on a less than 1:1 wt/wt basis in a food product; and
b) retorting the food product comprising heat-moisture treated flour for a time from about 15 minutes to about 80 minutes to achieve a F₀ value of at least 10.

It has now been discovered that use of heat-moisture treated flour may reduce the amount of time needed to achieve a required F₀ value, increasing the efficiency of the retort process without detrimentally affecting the organoleptic properties of the retorted food. The flour is processed by a heat-moisture treatment. The application also includes the improved retorted food products produced using such heat-moisture treated functional flours.

This application pertains to the use of heat-moisture treated flour to reduce the amount of time needed to achieve a required F₀ value, increasing the efficiency of the retort process without detrimentally affecting the organoleptic properties of the retorted food. The flour is processed by a heat-moisture treatment. The application also includes the improved retorted food products produced using such flours.

The amount of heat required to destroy microorganisms in a product can be determined through thermal death time (TDT) tests. TDT tests involve heating a known amount of microorganisms in a buffer solution or food at several temperatures and for several time intervals at each temperature. The results from the TDT tests are used to calculate D- and z-values. These values are used to define the heat resistance of specific microorganisms of concern. In conducting TDT tests, the thermal characteristics (D- and z-values) of the microorganisms can be determined. The D-value is defined as the time at a particular temperature required to reduce a known number of microorganisms by 90% or to result in a 1-log reduction in the number of microorganisms. By determining the D- values at various temperatures, a z-value can be determined from the slope of the line that results from plotting the log of D-values versus temperature. The z-value, indicative of the change in the death rate based on temperature, is the number of degrees between a 10-fold change (1 log cycle) in an organism's resistance. In order to compare thermal processes calculated for different temperatures, a standard F₀ value is assigned for each product.

This F₀ value is the time in minutes (at a reference temperature of 121°C and a z-value of 10°C) to provide the appropriate spore destruction (minimum health protection or commercial sterility). Using the reference value at 121°C and the D- and z- values, the time for commerically sterility can be converted to other temperatures. Due to a variety of factors (e.g., influence of the food on the destruction of spores) different foods will have different F₀ values. The F₀ value varies between organisms and between the same organism in different food products.

The flours used in preparing the present application may be derived from any native source. A native flour is suitable. Also suitable are flours derived from a plant obtained by standard breeding techniques including crossbreeding, translocation, inversion, transformation, insertion, irradiation, chemical or other induced mutation, or any other method of gene or chromosome engineering to include variations thereof. In addition, flour derived from a plant grown from induced mutations and variations of the above generic composition which may be produced by known standard methods of mutation breeding are also suitable herein.

Typical sources for the flours of this application are cereals, tubers, roots, legumes and fruits. The native source can include corn (maize), pea, potato, sweet potato, banana, barley, wheat, rice, sago, amaranth, tapioca, arrowroot, canna, or sorghum, as well high amylopectin or high amylose varieties thereof. In one embodiment, the flour is derived from wheat. In another embodiment, the wheat flour has an amylose content of at least 27% by weight of the starch. In yet another embodiment, the wheat flour has an amylose content of at least 40% by weight of the starch. In still another embodiment, the wheat flour is waxy wheat flour.

In one embodiment, the flour used in this application is derived from corn. In another embodiment, the corn flour has an amylose content of at least 50% by weight of the starch. In yet another embodiment, the corn flour has an amylose content of at least 70% by weight of the starch.

In one embodiment, the flour used comprises at least 5% protein and in another embodiment at least 10% protein, by weight of the flour. In one embodiment, the flour used comprises at least 1% lipid, and in another embodiment at least 3% lipid, by weight of the flour.

In another embodiment, the high amylose flour is extracted from a plant source having an amylose extender genotype (recessive or dominant). In another embodiment, the flour comprises starch containing less than 10% by weight amylopectin as determined by the butanol fractionation methodology. In yet another embodiment, the flour is derived from a plant breeding population, particularly corn, which is a genetic composite of germplasm selections and comprises at least 75% by weight amylose, and in one case at least 85% by weight amylose (*i.e*., normal amylose). In yet another embodiment, the flour comprises less than 10%, by weight of amylopectin, and in another embodiment less than 5%, amylopectin. In yet another embodiment, the flour comprises from about 8% to about 25% low molecular weight amylose. In a further embodiment, the flour is extracted from the grain of a starch bearing plant having a recessive amylose extender genotype coupled with numerous amylose extender modifier genes. Such plant is known and described in the art.

The flour is obtained from the native source using methods known in the art for producing flour, for example by dry milling. Other possible methods include, without limitation, wet grinding and separation or a combination of dry and wet procedures. One skilled in the art understands that the components of the flour may be manipulated; for example, the protein content of flour may be increased by known techniques, such as fine grinding and air classification.

In preparing the flour of this application it is necessary that the flour be processed at a specified total water content and defined temperature and time combination. This avoids or minimizes gelatinization of the starch component of the flour so that the starch substantially retains its granular structure (*e.g*., at least 90 wt% of the flour retains its granular structure). Slight gelatinization may occur, but should be minimized. In one embodiment, there is substantially no gelatinization.

The total water (moisture) content of the flour of this application will be in a range of from about 10% to about 50%, and in one embodiment in the range of from about 20% to about 30% by weight based on the weight of the dry flour

(dry solids basis). Examples of such moisture contents include but are not limited to about 5%, about 10%, about 15%, about 20%, about 30 % about 40%, about 50%, or any range between and/or including any two of these values. In one embodiment, this relative level of moisture is maintained substantially constant throughout the heating step. In another embodiment, no water is added to the flour during heating (*i.e*. no water is present during the heating step other than the moisture content of the flour). In another embodiment, the moisture content is not controlled (not kept substantially constant) during the heat-moisture treatment such that the treated flour has a lower moisture content once processed relative to that prior to processing.

In one embodiment, the flour of this application is heated at a target temperature of from 80°C to about 160°C. In one embodiment, the flour of this application is heated at a target temperature of from 90°C to about 140°C, and in one embodiment at a temperature from 100°C to about 120°C. While the most desirable temperature and water content may vary depending on the particular flour composition (including the source and amount of protein, starch, and lipid) and its amylose content, it is important that the starch remain in the granular state such that it does not lose its crystalline and birefringent characteristics. The time of heating the flour at the target temperature can vary depending on the flour used (source), its amylose content, the particle size, as well as the amount of moisture and the heating temperature. In one embodiment, such heating time will be from about 0.5 minutes to about 8 hours. In another embodiment, the heating time will be from about 0.5 minutes to about 2 hours. In another embodiment, the heating time will be from about 0.5 minutes to about 1 hour. In yet another embodiment, the heating time will be 0.5 to 15 minutes. The heat-up (ramp) time may vary depending upon the equipment used, the process conditions, and the flour used. In one embodiment, it is desirable to have a short heat-up time to avoid color and adverse flavor formation in the resultant flour. In another embodiment, the heat-up time is less than 5 minutes and in another embodiment the heat up time is less than 1 minute.

The conditions for obtaining heat-moisture treated flour, which may decrease the time to reach F₀ during retort processing, are such that the granular structure of the starch is not destroyed (gelatinized), retaining its crystalline and birefringent properties. Further, there should be no loss of any Maltese cross present in the native starch when the granular structure is viewed under polarized light. Under some conditions, such as at high moisture and high temperature, the starch granule may be partially swollen, but the crystallinity is not completely destroyed. Although the crystallinity of the starch remains, the heat-moisture treating changes other components of the flour, which may include structural changes. In one aspect, the conditions of the heat-moisture treating are chosen to maximize the flour's efficacy in retorting, yet minimize the undesirable heat-induced effects, such as reduced nutritional value (*e.g*. degradation of vitamins) or reduced organoleptic qualities (*e.g*. undesirable taste, aroma, texture, or increased color).

The heat treatment may be conducted in any equipment known in the art, which provides sufficient capabilities for powder processing, as well as heating and, if desired, moisture addition and control, mixing, and/or drying. In one embodiment, the equipment is a continuous tubular thin film dryer. In another embodiment, the equipment is a combination of a continuous thin film dryer in series with a continuous heated conveyer screw, which may additionally be pressurized to control moisture content at the target temperature. In yet another embodiment, the equipment is a batch ploughshare mixer. The heat treatment may be done as a batch or as a continuous process.

In one embodiment, the heat treatment is conducted as a batch process and the flour is brought up to a temperature from about 80°C to about 160°C range and held at a substantially constant temperature. In another embodiment, the heat treatment is conducted as a continuous process, with a short (less than five minute) ramp-up time. In one embodiment of the continuous process, the flour is brought up to a temperature from about 80°C to about 160°C range and held at a substantially constant temperature and in another embodiment, the heat treatment is substantially complete by the time such temperature is reached. The flour may additionally be processed either before or after the heat treatment process, as long as such process does not destroy the granular structure of the starch. In one embodiment, such additional processing may include degradation using α-amylase or acid treatment and in another embodiment, chemical modification. In one embodiment, no chemical modification is conducted on the flour.

The particle size of the flour may be adjusted, either before or after heat-moisture treating, for example by grinding, agglomerating, and/or sieving. In one embodiment, at least 90% of the heat-moisture treated flour has a particle size from about 250 microns to about 590 microns, and in another embodiment at least 90% of the heat-moisture treated flour has a particle size from about 180 microns to about 590 microns. In yet another embodiment, the heat-moisture treated flour has a particle size of no greater than 590 microns with 70% having a particle size of at least 180 microns and in a further embodiment the flour has a particle size of no greater than 590 microns with 80% having a particle size of at least 125 microns. In all cases, the particle size of the heat-moisture treated flour may be due to that of the flour before treatment or due to a change in particle size after treatment using methods known in the art. In one embodiment, the size after treatment is due to that of the flour before treatment. Any particle size adjustment must be done without gelatinizing the starch within the flour.

The flour may be purified to remove impurities, by-products, off-flavors, or colors by methods known in the art such as dialysis, filtration, ion exchange processes, or centrifugation. Such purification may be done on the base (native) flour or the heat-moisture treated flours as long as the methodology does not adversely affect the resultant flour. In one embodiment, the flour is bleached using methods known in the art to reduce color. The pH of the flour may also be adjusted using methods known in the art. The flour may be dried using any drying means known in the art which will not gelatinize its starch. In one embodiment, the flour is air dried and in another embodiment the flour is flash dried. The pre- and/or post-processing methods used may further increase the efficacy of the flour in the retort process or otherwise make the flour more desirable for use in foods.

The resulting flour product which has been heat-moisture treated will contain starch which has retained its granular structure as evidenced by its birefringent characteristic when viewed under the microscope and by no loss of any Maltese cross present in the native starch when viewed under polarized light. The starch of the flour will not be gelatinized.

In one aspect of the application, the resultant flour will also have a subpeak melting point temperature [Tp] (as measured by DSC using the method detailed in the Examples section) such that, if the flour was heat-moisture processed for a longer time period, Tp would substantially increase, by at least 5°C. The melting point temperature is dependent upon the source and composition of the initial flour as well as the treatment conditions. A lower melting point temperature is desirable in many cases as it would be indicative of a flour which would cook out more easily and may have a higher level of water absorption. In one embodiment, the flour is derived from corn having an amylose content of at least 70% amylose by weight and the melting point temperature of the heat-moisture treated flour is at least 100°C.

The resultant flour has an acceptable color with no or minimized deviation from the native flour. In one embodiment, the change in L-value in the Hunter Colorimeter test, which expresses whiteness on a scale from 0 to 100, between the native flour and the heat-moisture treated flour is less than 10. In another embodiment, the change in L-value is less than 5 and in another embodiment the change in L-value is less than 2.

The resultant flour may also have a high total dietary fiber (TDF) content. In one aspect of the application, the TDF is increased by at least 10% absolute, based upon the weight of the flour. Absolute increase is intended to mean final percent minus initial percent. Unless specified as absolute, all percents are based upon the formula [(final-initial)/initial] x 100%. Such TDF content is process tolerant in that the TDF content will not be substantially reduced by retorting and in one the TDF content embodiment will not be reduced by more than 10% by the retort process.

The resultant flours will provide opacity, mouth-coating properties, viscosity, and/or creaminess to the retorted products. The flour may be added as the sole viscosifier or additional viscosifiers may be added, such as gums and starches well known in the art for this purpose. In one aspect of the application, the flour is the only viscosifying agent added. The resultant starches may also have the added benefit of increasing the process tolerance of a food composition such that it's viscosity does not substantially change over time and in one embodiment the viscosity of the retorted product changes by less than 10% in twenty-four hours. The resultant flours will have an increased efficacy in retorting, such that substitution of the flour for the same flour without heat-moisture treatment (*e.g*. untreated native flour) will decrease the retort time necessary to reach F₀ by at least 10%, in one embodiment, will decrease the retort time necessary to reach F₀ at least 20%, in another embodiment, will decrease the retort time necessary to reach F₀ by at least 30%, in another embodiment, will decrease the retort time necessary to reach F₀ by at least 40%, in yet another embodiment, will decrease the retort time necessary to reach F₀ by at least 50%, or by an amount in the range between and/or including any two of these values.

In another aspect of the application, the flour will have an increased efficacy in retorting, such that substitution of the heat-moisture treated flour for the same or a comparable flour without heat-moisture treatment will decrease the amount of flour used by at least 5%, in one embodiment, will decrease the amount of flour by at least 10%, and in yet another embodiment, will decrease the amount of flour by at least 15% yet achieve the same viscosity at F₀. In still yet other embodiments, the reduction in the amount of flour needed due to the use of heat-moisture treated flour while achieving the same viscosity at F₀ include but are not limited to 5%, 10%, 15%, 20%, 30%, 40%, 50%, or ranges between and including any two of these values. As used herein, the same viscosity includes that which is practically the same; *i.e*. there is no more than 50 Brabender units difference between the viscosities of the food products being compared. In some embodiments, the use of the same amount of heat-moisture treated flour in place of a comparable flour which is not heat-moisture treated actually increases the viscosity after retort to F₀. In some embodiments the viscosity at F₀ is increased by at least 10%, at least 20%, at least 30%, at least 40%, at least 50%, at least 60%, at least 70%, at least 80%, at least 90%, at least 100%, or a range between or including any two of these values.

The flour of this application may be used in any retorted food product. Typical retorted food products include, but are not limited to, soups, sauces and gravies, or beverages such as juices. Sauces and gravies include both those retorted as sauces and gravies and those retorted with other food products, for examples the sauce of baked beans and sauces or gravies used to prepare meals used for food-service or for packaged refrigerated or frozen meals. Food products also include those which may also be classified as pharmaceutical or nutritional products, such as diabetic foods and supplements, dietetic foods, foods to control glycemic response, foods for dysphagia, or sports drinks.

The amount of flour which can be added and used in any given food will be determined to a great extent by the amount that can be tolerated by consumers of the food. In other words, the amount of flour used generally may be up to what is acceptable in organoleptic evaluation of the food. In one embodiment, the flour of this application is used in the same amount as the native flour (1:1 basis wt/wt). In another embodiment, the flour of this application is used in an amount from about 0.1% to about 20%, by weight of the food. In another embodiment, the flour of this application is used in an amount from about 0.5% to about 16%, by weight of the food. In another embodiment, the flour of this application is used in an amount from about 1% to about 12%, by weight of the food.

The heat-moisture treated flour may be used to partially or fully replace starch and/or flour in the retorted product. In one embodiment, the heat-moisture treated flour makes up from about 10% to about 100% by weight of starch and/or flour conventionally used in the retorted food product. In another embodiment, the heat-moisture treated flour makes up from about 25% to about 75% by weight of starch and/or flour conventionally used in the retorted food product. In another embodiment, the heat-moisture treated flour makes up from about 40% to about 60% by weight of starch and/or flour conventionally used in the retorted food product. In one aspect of the application, the heat-moisture treated flour is the only flour or starch added to the product prior to retorting the product.

The heat-moisture treated flour can be used to partially or fully replace typical starches and flours at different ratios to achieve comparable viscosity in the retorted product. In one embodiment, a ratio of about 1:1 wt/wt of heat-moisture treated flour to replace typical starches and flours may be used. In another embodiment, less than a ratio of about 1:1 wt/wt of heat-moisture treated flour to replace typical starches and flours may be used. For example, at least 0.2:1 (wt/wt) heat-moisture treated flour is used to replace the conventional starch or flour (e.g., 0.2 g heat-moisture treated flour is used to replace 1 g conventional starch or flour). In other embodiments, at least 0.3 to 1, at least 0.4:1, at least 0.5:1, at least 0.6:1, at least 0.7:1, at least 0.8:1, at least 0.9:1 or at least 0.95:1 (wt/wt) heat-moisture treated flour is used to replace the conventional starch or flour. In yet another embodiment, no more than 3:1 (wt/wt) heat-moisture treated flour is used to replace the conventional starch or flour.

The products made using the flours of this application may be fed to (ingested by) any animal and in one embodiment to mammals and in another embodiment to humans.

### DEFINITIONS

The following definitions are used in connection with the compounds of the present application unless the context indicates otherwise. The acronym HMT means heat-moisture treated. The acronym APF means all purpose flour.

As used herein, the phrase, "commercially sterile" means acceptable for commercial sale and is intended to include destruction of *Clostridium botulinum.* In one embodiment, "commercially sterile" would also include inactivation of other pathogenic and/or spoilage microorganisms such as those which may cause health hazards, spoilage and/or decomposition.

As used herein, "flour" is intended to mean a multicomponent composition which includes starch and may include protein, fat (lipids), fiber, vitamins and/or minerals. Flour is intended to include, without limitation, meal, whole meal, cone, masa, grits, or flaking grits, but is not intended to include pure starch extracted, such as from a flour, through removal of other components such as those described above.

As used herein, "gelatinization" is intended to mean the process by which starch is cooked out and loses its granular structure. During "gelatinization", as used herein, starch loses its birefringent property as well as any Maltese cross present in its native state.

As used herein, "granular" is intended to mean the structure of native starch in which the starch is not water soluble (still at least partly crystalline) and exhibits birefringence and a typical Maltese cross under polarized light. In high amylose starches, some native granules do not exhibit a Maltese cross, particularly filamentous granules.

As used herein, "heating time" is the time at the target temperature and does not include heat-up (ramping) time.

As used herein, the phrase "heat-moisture treatment" means a process in which a subject is heated by using, as a heating medium, saturated steam, or hot water in a high-humidity atmosphere, for example, an atmosphere of at least 60% humidity. The subject to be heated may be brought into direct contact with the heating medium or the subject may be brought into indirect contact with the heating medium like an indirect heating system, for example, in an atmosphere of at least 60% humidity may be performed. Typical conditions for heat-moisture treatment heating a flour with a total water content of from about 10% to about 50% by weight at a target temperature of from about 80°C to 160°C for a time from about 0.5 minutes to about 8 hours using a combination of time, temperature and moisture which will not gelatinize, or destroy the granular nature of, the starch within the flour. Further, heat-moisture treatment increases the resistance of flour to subsequent cook and retort processes in the preparation of retorted food products.

The heat-moisture treatment of native starch causes an irreversible modification of the semi-crystalline structure, which changes from an ordered state to a disordered state, resulting in gelatinization. The gel thus formed is not stable and after a few days the starch restructures itself into a more ordered structure, this phenomenon being known as retrogradation. The physical characteristics of starches are modified by heat-moisture treatment without change in their granular appearance. These changed characteristics include change in equilibrium moisture content, change in X-ray diffraction pattern, change in the swelling power of starch granules, and increase in the gelatinization temperature. As used herein, "heat-up time" or "ramping time" is intended to mean the time required to heat the flour from room temperature to target temperature.

As used herein, the term "high amylose flour" is intended to include flour whose starch contains at least 27% amylose for wheat or rice flour and at least 50% amylose for other sources. In one embodiment, the flour from other sources contains at least 70% amylose. In one embodiment, the flour from other sources contains at least 80% amylose by weight. In one embodiment, the flour from other sources contains at least 90% amylose by weight. The percent amylose (and therefore amylopectin) is determined by using the potentiometric method. As used herein, the phrases "low amylose flour", "high amylopectin flour" or "waxy flour" are intended to mean flour whose starch containing less than 10% amylose by weight, in one embodiment less than 5% amylose by weight, in another embodiment less than 2% amylose by weight, and in yet another embodiment less than 1% amylose by weight of the starch.

As used herein, the term "native flour" is derived from a plant as it is found in nature.

As used herein, the phrase "processing medium" or "processing media" is intended to include any fluid in which the retorting is accomplished and includes without limitation saturated steam, air, steam, water, or any combinations thereof.

As used herein, the phrase "retort equipment" is intended to mean any type of equipment in which the retort process may be conducted and includes, without limitation, static retorts, agitating retorts, rotational retorts, or hydrostatic retorts.

As used herein, the phrase "retorted food product" is intended to mean any food which undergoes a retort process known in the art. Typical "retorted food products" include, but are not limited to, soups, sauces and gravies, or beverages such as juices. Sauces and gravies include both those retorted as sauces and gravies and those retorted with other food products, for examples the sauce of baked beans and sauces/ gravies used to prepare meals used for food-service or for packaged refrigerated or frozen meals.

As used herein, the phrase "retort process" is intended to mean a process in which the food medium is exposed to heat in a sealed container to render it commercially sterile. Retorting includes such process in any sealed container, including without limitation a can, pouch or jar of any material including without limitation glass and metals.

As used herein, the phrase "retort temperature" can be in any range that is suitable to safely process the materials of interest. Without being limiting in any way, the temperatures can be in a range from about 90°C to about 150°C.

As used herein, the phrase "structural change" is intended to mean change to any native structure of the flour components, and includes without limitation protein denaturation, starch annealing or crystallization, or formation of complexes or other interactions between the flour components.

As used herein, the phrase "subpeak melting point temperature" is intended to mean a melting point temperature (Tp) that, if the flour was heat-moisture processed for a longer time period, would substantially increase, by at least 5°C. As used herein, the phrase "target temperature" is the temperature at which the flour is heat-moisture processed and in one embodiment begins when the flour reaches 80°C.

As used herein, the phrase "total water content" or "total moisture content" is intended to mean the moisture (water) content of the flour as well as any water added during processing. Thus, if the percent moisture of the flour is 12% and 3% water is added (dry flour basis), the total water content of the flour is 15%. Certain specific aspects and embodiments of the present application will be explained in greater detail with reference to the following examples, which are provided only for purposes of illustration and should not be construed as limiting the scope of the application in any manner. Reasonable variations of the described procedures are intended to be within the scope of the present invention. While particular aspects of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

### EMBODIMENTS

The following embodiments are presented to further illustrate and explain the present invention and should not be taken as limiting in any regard.
1. A process comprising retorting a food product comprising heat-moisture treated flour for a time from about 15 minutes to about 80 minutes to achieve a F₀ value of at least 10.
2. The process of embodiment 1, wherein the time is from about 50 minutes to about 70 minutes.
3. The process of embodiment 1, wherein the heat-moisture treated flour comprises from about 0.1 wt% to about 20 wt% of the total weight of the retorted food product.
4. The process of embodiment 3, wherein the heat-moisture treated flour comprises from about 5% (wt/wt) to about 7% (wt/wt) of the total weight of the retorted food product.
5. The process of embodiment 1, wherein the time to achieve a F₀ value of at least 10 is at least 10% less than the time to achieve a F₀ value of at least 10 with a flour which was not heat-moisture treated.
6. The process of embodiment 5, wherein the time to achieve a F₀ value of at least 10 is at least 20% less than the time to achieve a F₀ value of at least 10 with a flour which was not heat-moisture treated.
7. The process of embodiment 6, wherein the time to achieve a F₀ value of at least 10 is at least 30% less than the time to achieve a F₀ value of at least 10 with a flour which was not heat-moisture treated.
8. The process of embodiment 1, wherein the heat-moisture treated flour comprises from about 10 wt% to about 100 wt % of the starch and/or flour in the food product.
9. The process of embodiment 8, wherein the heat-moisture treated flour is the only starch or flour in the food product.
10. The process of embodiment 1, wherein the heat-moisture treated flour has replaced an equivalent amount of the same flour which was not heat-moisture treated on a 1:1 wt/wt basis in the retorted food product.
11. The process of embodiment 1, wherein the retorted food product is soup, sauce, gravy, or beverage.
12. A process comprising:
   a) substituting heat-moisture treated flour for a larger amount of flour which was not heat-moisture treated on a less than 1:1 wt/wt basis in a food product; and
   b) retorting the food product comprising heat-moisture treated flour for a time from about 15 minutes to about 80 minutes to achieve a F₀ value of at least 10.
13. The process of embodiment 12, wherein the amount of the heat-moisture treated flour is in an amount of at least 5% (wt/wt) less than the flour which was not heat-moisture treated.
14. The process of embodiment 13, wherein the amount of the heat-moisture treated flour is in an amount of at least 10% (wt/wt) less than the flour which was not heat-moisture treated.
15. The process of embodiment 14, wherein the amount of the heat-moisture treated flour is in an amount of at least 15% (wt/wt) less than the flour which was not heat-moisture treated.
16. The process of embodiment 12, wherein the heat-moisture treated flour comprises from about 10 wt% to about 100 wt % of the starch and/or flour in the food product.
17. The process of embodiment 16, wherein the heat-moisture treated flour is the only starch or flour in the food product.
18. The process of embodiment 12, wherein the heat-moisture treated flour comprises from about 0.1 wt% to about 20 wt% of the total weight of the retorted food product.
19. The retorted product of embodiment 1.
20. The retorted product of embodiment 12.

### EXAMPLES

All parts and percentages are given by weight and all temperatures in degrees Celsius (°C) unless otherwise noted. The following analytical procedures were used throughout the examples.

**Amylose content by potentiometric titration.** A 0.5 g portion of starch (1.0 g of ground grain) sample was heated in 10 mL of concentrated calcium chloride (about 30% by weight) to 95°C for 30 minutes. The sample was cooled to room temperature, diluted with 5 mL of a 2.5% uranyl acetate solution, mixed well, and centrifuged for 5 minutes at 2000 rpm. The sample was then filtered to give a clear solution. The starch concentration of the sample was determined polarimetrically in a 1 cm polarimetric cell using standard procedures. An aliquot of the sample (normally 5 mL) was then directly titrated with a standardized 0.01 N iodine solution while recording the potential using a platinum electrode with a KCl reference electrode. The amount of iodine needed to reach the inflection point was measured directly as bound iodine. The amount of amylose was calculated by assuming 1.0 gram of amylose will bind with 200 milligrams of iodine.

**Pre-cook Procedure.** The dry ingredients were slurried into water and/or wet ingredients, as appropriate. The slurry was heated in boiling water bath with stirring to the desired temperature and held for desired time. The heated slurry was filled into 10 oz. cans and sealed.

**Retort Procedure.** The cans were placed into a Stock 900 Pilot Retort Full Water Immersion Retort rotary at 121°C (250°F) for 40 minutes. The F₀ data was collected using Ellab Software.

**Viscosity Evaluation Procedure.** The viscosity and appearance of samples were assessed as follows: (i) Brookfield Viscosity a Model DV-II+ Brookfield apparatus with the parameters: "B" t-bar (#92), heliopath off, 30 second measurement in centipoise at 10 rpm was used. The apparatus was turned on, the viscosity was determined prior to filling cans and after retorting (cps). (ii) Visual the sample was stirred 4 times with a spoon to feel the viscosity. The spoon was lifted from the sample and the flow off spoon was observed. The surface and clarity were examined.

**Procedure for Preparing Flour in Water Cooks.** Cook Procedure: the starch and flour were weighed and dry blend together. The water and/or wet ingredients were weighed into a beaker. The starch and flour blend were added into the water and/or wet ingredients with stirring. The resulting slurry was heated in a boiling water bath with continual stirring to the temperature and hold times indicated in table below. A 300 g sample of the starch cook was filled into 10oz. cans with and the cans sealed. Retort Procedure: the cans were placed into a Stock 900 Pilot Retort Full Water Immersion apparatus and retorted at 121°C for 40 minutes. The F₀ data was collected using Ellab Software. **Procedure for Preparing Cream of Chicken Soups:** Cook Procedure: the flour, starch, salt, sugar, MSG, and poultry seasoning were weighed and blend together. The water, whipping cream, and oil were weighed into a beaker. The dry ingredients blend was added into the water, cream, and oil mixture with stirring. The butter was melted and added to the beaker. The mixture was heated in a boiling water bath with continual stirring until temperature reaches 90°C. A 300 g sample of the soup mixture was filled into 10 oz cans, which were sealed. Retort Procedure: The cans were placed in Stock 900 Pilot Retort Full Water Immersion and retorted statically at 121°C for 60 minutes. The F₀ data was collected using Ellab Software.

**Thermal analysis by DSC.** Thermal analysis of the native and hydro-thermally treated flours was performed using a Perkin Elmer Differential Scanning Calorimeter 7 with liquid nitrogen cooling accessory. A 10 mg anhydrous sample is weighed into a stainless steel hermetic pan and water is added to obtain 3:1 water to flour ratio. The pan is sealed and scanned from 10°C-160°C at 10°C/min heating rate. The sample is run in duplicates and the average values of onset, peak and end melting temperatures (°C), and gelatinization enthalpy values (J/g) is determined.

**Materials and Methods.** HMT 1 flour, a commercial functional wheat flour which is heat-moisture treated and has process tolerance, and HMT 2 flour another wheat flour which is heat-moisture treated were used. The all purpose flour was a standard wheat flour from the grocery store. The modified corn starch was a hydroxypropyl distarch phosphate made from waxy corn.

**Examples 1-8 Starch and Flour in Water Cooks.** To investigate the improved properties of retorted food products using heat-moisture treated flour of the present technology, a series of starch and flour in water cooks were prepared and retorted to F₀ in accordance with Pre-Cook Procedure above (Examples 1-8). In each series 2 wt% modified corn starch was combined with the specified amount of flour selected from all purpose flour (non-heat-moisture treated flour), and one of two types of heat-moisture treated flour (see Table 1) Each starch/flour mixture was prepared, cooked, and retorted according to the Procedure for Preparing Flour in Water Cooks above at the conditions listed in Table 1 below. The time to F₀ and the pre- and post-retort viscosity were measured. Results of these measurements are also shown in Table 1. The starch/flour cooks of Examples containing heat-moisture treated flour (Examples 1B, 2B, 3B, 4B, 5B, 6B, 6C, 7B, 8B, 8C) exhibited shorter times to F₀ than Examples which contained a comparable flour which was not heat-moisture treated (Examples 1A, 2A, 3A, 4A, 5A, 6A, 7A, 8A). The Examples including heat-moisture treated flour also exhibited excellent retention of viscosity or even increased viscosity after retort compared to Examples which lacked heat-moisture treated flour.

**Table 1.**

| exam No. | flour type | % flour | cook temp (°C) | hold time (min.) | time to F₀ = 10 (min.) | pre retort viscosity | post retort viscosity | visual evaluation |
|---|---|---|---|---|---|---|---|---|
| 1A | all purpose flour | 4 | 85 | 0 | 51 | 2760 | 1720 | Thin, Watery, Opaque |
| 1B | HMT 1 wheat flour | 4 | 85 | 0 | 31 | 1560 | 4640 | Slightly thicker but still thin, Runny, Opaque |
| 2A | all purpose flour | 4 | 85 | 20 | 43 | 4960 | 1120 | Thin, Watery, Opaque |
| 2B | HMT 1 wheat flour | 4 | 85 | 20 | 31 | 3120 | 3800 | Slightly thicker but still thin, Runny, Opaque |
| 3A | all purpose flour | 4 | 90 | 0 | 42 | 5360 | 2280 | Thin, Watery, Opaque |
| 3B | HMT 1 wheat flour | 4 | 90 | 0 | 39 | 2680 | 4760 | Slightly thicker but still thin, Runny, Opaque |
| 4A | all purpose flour | 4 | 90 | 20 | 37 | 4800 | 1160 | Thin, Watery, Opaque |
| 4B | HMT 1 wheat flour | 4 | 90 | 20 | 31 | 5680 | 4440 | Slightly thicker but still thin, Runny, Opaque |
| 5A | all purpose flour | 6 | 85 | 0 | 55 | 11440 | 4040 | Thin - Moderate Viscosity, Runny, Opaque |
| 5B | HMT 1 wheat flour | 6 | 85 | 0 | 27 | 12800 | 14000 | Thick, Smooth, Opaque |
| 6A | all purpose flour | 6 | 85 | 20 | 51 | 9680 | 3200 | Thin - Moderate Viscosity, Runny, Opaque |
| 6B | HMT 1 wheat flour | 6 | 85 | 20 | 27 | 13840 | 13080 | Thick, Smooth, Opaque |
| 6C | HMT 2 wheat flour | 6 | 85 | 20 | 38 | 19880 | 7880 | Moderate, Smooth, Opaque |
| 7A | all purpose flour | 6 | 90 | 0 | 50 | 4960 | 3840 | Thin - Moderate Viscosity, Runny, Opaque |
| 7B | HMT 1 wheat flour | 6 | 90 | 0 | 28 | 4560 | 13680 | Thick, Smooth, Opaque |
| 8A | all purpose flour | 6 | 90 | 20 | 51 | 8600 | 3600 | Thin - Moderate Viscosity, Runny, Opaque |
| 8B | HMT 1 wheat flour | 6 | 90 | 20 | 27 | 12820 | 13400 | Thick, Smooth, Opaque |
| 8C | HMT 2 wheat flour | 6 | 90 | 20 | 39 | 18560 | 7600 | Moderate, Some cohesiveness, Opaque |

**Example 9 Cream of Chicken Soup.** To further investigate the performance of heat-moisture treated flour in a retorted food product, cream of chicken soup was prepared, cooked and retorted in accordance with the Procedure for Preparing Cream of Chicken Soups above using the ingredients and amounts listed in Table 2, below. As above, a series of soups (Examples 9A-C) were made with flour selected from a non-heat-moisture treated flour and two types of heat-moisture treated flour. Cook conditions are provided in Table 3 below. The time to F₀ and the pre- and post-retort viscosity were measured. Results are shown in Table 3. The soups made with the heat-moisture treated flour displayed shorter times to F₀, while maintaining acceptable viscosity.

**Table 2**

| **Ingredient** | **%** |
|---|---|
| chicken broth | 4.54 |
| Butter | 1.95 |
| corn oil | 0.65 |
| heavy whipping cream | 5.2 |
| nonfat dry milk (Hi Heat) | 0.65 |
| Flour | 5.15 |
| modified corn starch. | 3.09 |
| Salt | 1.95 |
| Suqar | 0.16 |
| monosodium glutamate | 0.33 |
| poultry seasoning | 0.4 |
| Water | 75.93 |

**Table 3**

| exam No. | flour type | % flour | cook temp (°C) | hold time (min.) | time to F₀ = 10 (min.) | pre retort viscosity | post retort viscosity | visual evaluation |
|---|---|---|---|---|---|---|---|---|
| 9A | all purpose flour | 5.15 | 90 | 0 | 49 | 33300 | 14900 | Thick, Smooth, Opaque |
| 9B | HMT 1 wheat flour | 5.15 | 90 | 0 | 27 | 36100 | 22900 | Slightly Thicker than APF, Smooth, Opaque |
| 9C | HMT 2 wheat flour | 5.15 | 90 | 0 | 34 | 25680 | 4400 | Moderate, Slightly cohesive, Opaque |

Throughout this application, various publications are referenced. The disclosures of these publications in their entireties are hereby incorporated by reference into this application in order to more fully describe the state of the art as known to those skilled therein as of the date of the application described and claimed herein.

While particular embodiments of the present application have been illustrated and described, it would be obvious to those skilled in the art that various other changes and modifications can be made without departing from the spirit and scope of the application. It is therefore intended to cover in the appended claims all such changes and modifications that are within the scope of this application.

## Claims

1. A process comprising retorting a food product comprising heat-moisture treated flour for a time from about 15 minutes to about 80 minutes to achieve a F₀ value of at least 10.

2. A process comprising:
a) substituting heat-moisture treated flour for a larger amount of flour which was not heat-moisture treated on a less than 1:1 wt/wt basis in a food product; and
b) retorting the food product comprising heat-moisture treated flour for a time from about 15 minutes to about 80 minutes to achieve a F₀ value of at least 10.

3. The process of claim 1, wherein the time to achieve a F₀ value of at least 10 is at least 10% less than the time to achieve a F₀ value of at least 10 with a flour which was not heat-moisture treated.

4. The process of claim 1-3, wherein the heat-moisture treated flour comprises from about 10 wt% to about 100 wt % of the starch and/or flour in the food product.

5. The process of claim 4, wherein the heat-moisture treated flour is the only starch or flour in the food product.

6. The process of any one of claim 1-5, wherein the heat-moisture treated flour comprises from about 0.1 wt% to about 20 wt% of the total weight of the retorted food product.

7. The process of any one of claims 1, 3-6, wherein the heat-moisture treated flour has replaced an equivalent amount of the same flour which was not heat-moisture treated on a 1:1 wt/wt basis in the retorted food product.

8. The process of claim 2, wherein the amount of the heat-moisture treated flour is in an amount of at least 5% (wt/wt) less than the flour which was not heat-moisture treated.

9. The process of any one of claims 1-8, wherein the retorted food product is soup, sauce, gravy, or beverage.

10. The retorted product of any one of claims 1-9.
